(19) Europäisches Patentamt / European Patent Office / Office européen des brevets

(11) **EP 3 141 853 B1**

(12) **FASCICULE DE BREVET EUROPEEN**

(45) Date de publication et mention de la délivrance du brevet:
**01.08.2018 Bulletin 2018/31**

(51) Int Cl.:
*F26B 13/16* (2006.01)     *F26B 21/00* (2006.01)
*F26B 21/04* (2006.01)     *F26B 21/12* (2006.01)
*F26B 23/00* (2006.01)

(21) Numéro de dépôt: **16187858.2**

(22) Date de dépôt: **03.11.2015**

(54) **INSTALLATION DE SECHAGE D'UN VOILE DE NON-TISSE HUMIDE**

TROCKENANLAGE FÜR EINE FEUCHTE VLIESSTOFFBAHN

INSTALLATION FOR DRYING A WET NON-WOVEN WEB

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1402884**

(43) Date de publication de la demande:
**15.03.2017 Bulletin 2017/11**

(62) Numéro(s) de document de la (des) demande(s) initiale(s) en application de l'article 76 CBE:
**15192832.2 / 3 034 976**

(73) Titulaire: **ANDRITZ Perfojet SAS**
**38330 Montbonnot (FR)**

(72) Inventeurs:
• **SCHMIT, Laurent**
  **38420 Le Versoud (FR)**
• **PLANET, Alain**
  **38530 Barraux (FR)**

(74) Mandataire: **Eidelsberg, Victor Albert et al**
**Cabinet Flechner**
**22, Avenue de Friedland**
**75008 Paris (FR)**

(56) Documents cités:
| | |
|---|---|
| EP-A2- 0 743 381 | WO-A2-2004/057254 |
| FR-A- 1 182 636 | FR-A1- 2 925 920 |
| US-A- 3 525 164 | US-A1- 2002 066 204 |
| US-A1- 2004 099 393 | US-B2- 6 551 461 |

**Description**

La présente invention se rapporte aux installations de séchage d'un voile de non-tissé.

Au US 6 551 461 B2, on décrit un procédé de séchage d'un voile humide, en faisant passer dans un four à travers du voile humide, déplacé par un moyen de transport, de l'air chaud qui ainsi s'humidifie, en réchauffant une première partie de l'air humidifié et en le faisant repasser dans le four à travers du voile humide et en faisant dans un dispositif de séchage, en amont du four dans le sens de déplacement du voile, à travers du voile humide déplacé, une deuxième partie de l'air humidifié.

On constate que le voile de non-tissé ainsi obtenu n'est pas séché d'une manière uniforme.

L'invention y remédie par une installation de séchage d'un voile de non-tissé suivant la revendication 1.

En montant une première tôle perforée créant une perte de charge dans le raccord de sortie du caisson de diffusion, et en donnant de préférence à la tôle perforée un gradient de taux de vide décroissant à partir de l'entrée du caisson de diffusion, on uniformise le courant d'air passant à travers le voile humide et, en conséquence, l'humidité du voile de non-tissé sortant de l'installation.

Les perforations de la première tôle perforée ont de préférence un diamètre de 2 à 8 mm, et mieux de 2 à 4 mm. L'épaisseur de cette tôle va de préférence de 1 à 3 mm (le mieux est 1,5 mm).

Par taux de vide, on entend le rapport de la surface ouverte de la tôle à la surface totale. De préférence, le taux de vide est compris entre 10% et 60%. On a obtenu une uniformisation particulièrement bonne lorsque le taux de vide de la première tôle perforée va de 40 à 60 % du côté de l'entrée du caisson de diffusion, où il est le plus grand, à 10 à 20% à l'opposé de l'entrée où il est le plus petit. On préfère que le rapport entre ces taux de vide soit 1/4 à 1/6 et soit notamment d'environ 1/5.

Le caisson comme le raccord ont notamment la même longueur et la même largeur. Ils peuvent se présenter sous la forme de parallélépipèdes. De préférence, l'entrée dans le caisson de diffusion s'effectue par un petit côté frontal, ce qui simplifie la fabrication du caisson.

Le raccord peut être bridé à un canal, dans lequel est monté un faisceau en nid d'abeille, de préférence supporté par une deuxième tôle perforée ayant un taux de vide supérieur à celui de la première tôle perforée et de 40% à 60%, dont la dimension des alvéoles est plus grande que celle des perforations de la première tôle perforée et d'une longueur de 30 à 100 mm, de préférence de 40 à 60 mm. Le diamètre équivalent d'un alvéole est compris entre 3 et 10 mm, de préférence entre 4 et 6 mm. Le diamètre équivalent D se calcule par

$$D = \frac{4S}{P},$$ S étant la section de l'alvéole et P étant le périmètre de l'alvéole. Les alvéoles sont de préférence de section droite hexagonale. D'une manière très préférée, on a longueur (c'est-à-dire dimension suivant la direction de passage de l'air dans le nid d'abeille ou axe du canal) / D équivalent du nid d'abeille > 10. Le faisceau en nid d'abeille permet d'orienter le flux parallèlement à la direction du canal et de maximiser ainsi le transfert de l'air de diffusion vers la caisse aspirante. Mais les particules polluantes provenant d'amas de fibres relarguées par le ventilateur polluent le nid d'abeille et provoquent des défauts d'homogénéité de l'écoulement au fur et à mesure de l'encrassement du nid d'abeille. La première tôle perforée joue aussi un rôle de filtration, en évitant la pollution du faisceau en nid d'abeille et du voile non-tissé. Dans cette fonction et d'une manière éventuellement indépendante du gradient de taux de vide et/ou de la présence du nid d'abeille, la première tôle perforée peut aussi avantageusement être recouverte d'une toile métallique dont les dimensions de perforation sont plus petites que celles de la première tôle perforée, par exemple dont les perforations ont une dimensions de 0,1 à 1 mm et ayant un taux de vide compris entre 25% et 50% et d'une épaisseur comprise entre 0,5 et 2 mm, ce qui assure une filtration encore meilleure et empêche la pollution du non-tissé.

C'est maintenant la première tôle perforée qui s'encrasse le plus vite. C'est pourquoi, il est prévu, suivant un mode de réalisation de l'invention, de la monter dans un tiroir amovible de raccord, qui a de préférence une poignée à l'extérieur du raccord. Pour remplacer la première tôle perforée, il n'est plus nécessaire de débrider le raccord du canal. Il suffit de sortir le tiroir dans lequel la première tôle perforée est montée, de sortir la première tôle perforée du tiroir, de la nettoyer, puis de la remettre dans le tiroir ou d'en mettre une neuve et de remettre le tiroir en place dans le raccord. L'entretien de l'installation est grandement facilité. De la même façon, le nid d'abeille peut être monté sur un tiroir qui peut être sorti indépendamment de l'autre tiroir.

Aux dessins annexés, donnés uniquement à titre d'exemples :

La figure 1 illustre l'installation suivant l'invention,

La figure 2 est une vue en perspective de la caisse de diffusion,

La figure 3 en est une vue en élévation,

La figure 4 est une vue en perspective de la tôle perforée, et

La figure 5 est une vue en perspective d'une autre caisse de diffusion.

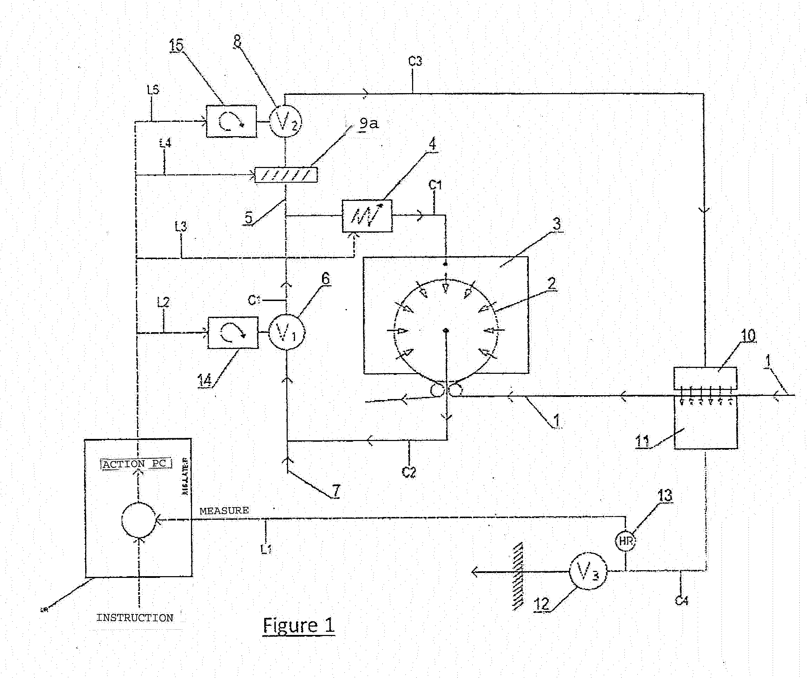

A la figure 1, le voile asséché 1 circule autour d'un tambour 2 ou sur un convoyeur.

On injecte par un conduit C1 d'entrée de l'air chaud sous pression dans la hotte 3 grâce à un ventilateur V1 6 (appelé ventilateur principal) et à une source de chaleur 4 qui réchauffe l'air. Cette source de chaleur 4 peut être par exemple un brûleur à gaz ou un échangeur thermique (à huile, air, eau ou électrique).

Cet air chaud traverse ensuite le voile humide et le tambour 2 (ou la toile du convoyeur) : par ce procédé, l'eau contenue dans le voile est évaporée au fur et à mesure que le voile avance sur le tambour 2 (ou sur le convoyeur). L'air qui a traversé le voile s'est refroidi et s'est chargé en humidité. Il est alors aspiré par un conduit C2 d'extraction à l'intérieur du tambour 2 par le ventilateur V1 6, et à nouveau réchauffé par la source de chaleur 4 et réinjecté dans la boucle et ainsi de suite.

La source de chaleur 4 peut être placée en amont ou en aval du ventilateur V1 6. De préférence, elle est placée en aval comme décrit sur la figure, dans le cas d'un échangeur et en amont dans le cas d'un brûleur à gaz.

Le moteur de ce ventilateur V1 6 est piloté par un variateur de fréquence 14.

La température de l'air chaud injecté dans la hotte 3 est régulée par l'action de la source de chaleur 4.

Une partie de l'air refroidi et humide est évacué à l'extérieur de la boucle afin de ne pas concentrer l'humidité dans la boucle de circulation. On évacue donc une partie de l'air refroidi et humide par le conduit C3 de dérivation grâce à la pression générée en sortie par le ventilateur V1 (6) si elle est suffisante ou grâce à un ventilateur de dérivation supplémentaire V2 (8).

Le conduit C3 de dérivation peut être connecté en amont de V1.

Des volets 9 bis peuvent être installés dans le conduit C3 de dérivation afin de pouvoir réguler la valeur du débit extrait.

Dans le cas où il y a un ventilateur de dérivation V2 (8), le moteur de ce ventilateur peut être piloté par variateur de fréquence. S'il y a des volets de réglage 9, ce pilotage par variateur n'est pas nécessaire.

Pour combler ce déficit d'air dans la boucle, on aspire dans la salle de production de l'air d'appoint en amont du ventilateur V1 par la tuyauterie 7 d'appoint.

L'air refroidi et humide évacué par le conduit C3 de dérivation est injecté ensuite dans une caisse de diffusion 10 qui va diffuser l'air au-dessus d'une caisse aspirante de séchage 11 localisée en amont du four 3, sur laquelle circule le voile à sécher.

Cette caisse aspirante de séchage 11 peut être localisée soit dans un convoyeur (support voile = toile de convoyeur), soit dans un cylindre (support voile = cylindre nickel, tôle perforée, toile métallique).

L'air est aspiré dans la caisse de séchage 11 par un ventilateur d'extraction final V3 12. De préférence, ce ventilateur 12 est positionné au plus proche de la caisse de séchage 11.

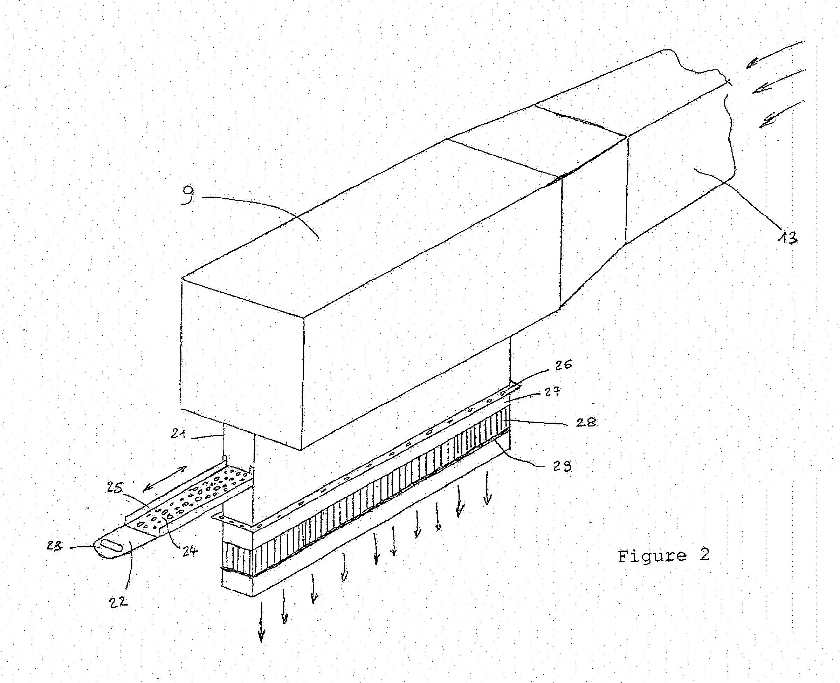

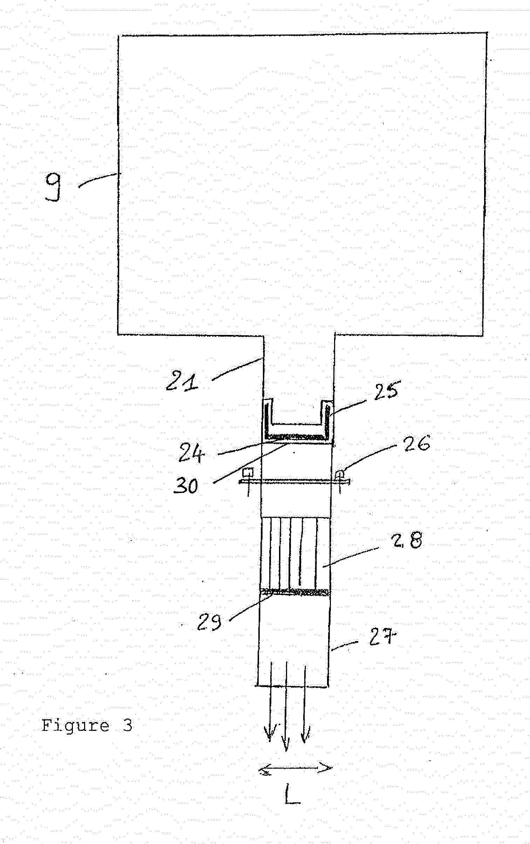

La caisse de diffusion représentée aux figures 2 et 3 comporte un caisson 9 parallélépipédique ayant deux faces frontales, dont l'une est fermée et dont l'autre reçoit en entrée le flexible 13. De la grande face inférieure part un raccord 21 parallélépipédique de même longueur que le caisson. La largeur du caisson 9 est la même que la largeur du raccord 21. La largeur L du raccord 21 va de 400 à 1200 mm. Dans ce raccord 21, est monté un tiroir 22 amovible coulissant ayant une poignée 23 et portant une première tôle 24 perforée ayant un taux de vide de 10 à 60%. Le tiroir 22 coulisse dans le raccord 21 par des glissières 25. La première tôle 24 perforée est recouverte d'une toile 30 métallique fine ayant un taux de vide de 25 à 50%.

Au raccord 21 est bridé, par des brides 26, un canal 27, dans lequel est monté un faisceau 28 en nid d'abeille, supporté par une deuxième tôle 29 perforée ayant un taux de vide de 40 à 60%. Les alvéoles du faisceau 28 en nid d'abeille ont un diamètre équivalent du cercle inscrit dans l'hexagone de 4 à 10 mm.

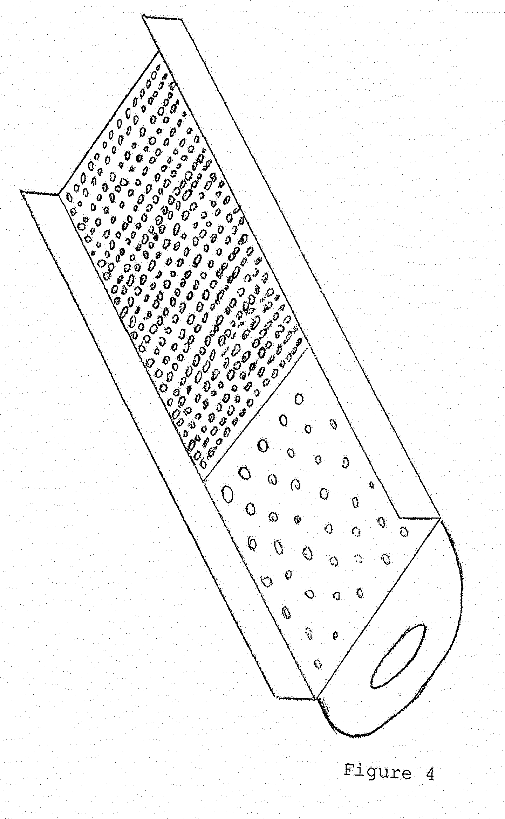

La figure 4 montre que la première tôle 24 perforée a un gradient de taux de vide.

A la figure 4, la partie à droite de la première tôle a un taux de vide plus grand que la partie à gauche. La partie à droite a un taux de vide de 40 à 60%. La partie de gauche a un taux de vide de 10 à 20%. La variation du taux de vide de droite à gauche peut s'effectuer progressivement ou par échelon. Cette variation peut être obtenue par un même nombre de perforations mais dont les dimensions croissent de droite à gauche ou par des perforations de mêmes dimensions, mais en nombre différent.

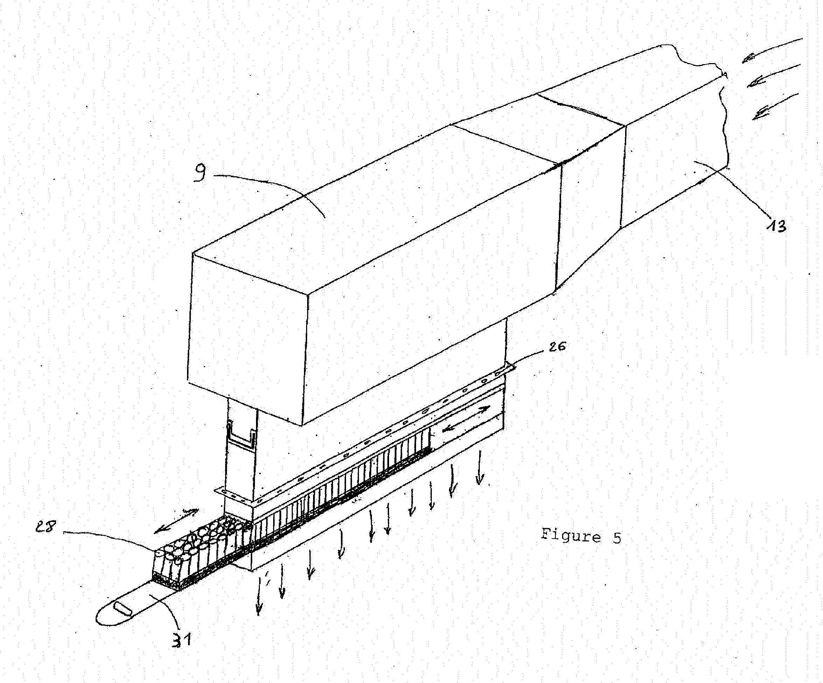

La figure 5 est une vue semblable à la figure 2 d'une caisse de diffusion dans laquelle le faisceau 28 en nid d'abeille est monté sur un tiroir 31 amovible.

**Revendications**

1. Installation de séchage d'un voile de non-tissé qui comprend :

   - un ventilateur (6),
   - un four (3) de chauffage ayant une entrée et une sortie,
   - un conduit (C1) d'entrée qui met le refoulement du ventilateur (6) en communication avec l'entrée du four (3) et envoie de l'air refoulé à l'entrée du four,
   - une source (4) de chaleur disposée de manière à ce que l'air refoulé dans le conduit (C1) d'entrée soit chauffé,
   - un conduit (C2) de sortie qui met la sortie du four (3) en communication avec l'aspiration du ventilateur (6),
   - un dispositif de séchage comprenant un caisson (10) de diffusion ayant un raccord de sortie,
   - un conduit (C3) de dérivation, en dérivation du conduit (C1) d'entrée en amont de la source (4) de chaleur, mettant le conduit (C1) d'entrée en communication avec l'entrée du dispositif (10, 11) de séchage,

- un moyen (2) de transport qui déplace un voile dans le dispositif (10, 11) de séchage et dans le four (3), le dispositif (10, 11) de séchage étant en amont du four (3) dans le sens de déplacement du voile et

- un conduit (C4) d'extraction de l'air du dispositif (10, 11) de séchage, **caractérisée en ce que**, dans le raccord (21) de sortie, est montée une tôle (24) perforée et en aval de la tôle (24) perforée est monté dans le raccord (21) de sortie ou dans un canal (27) qui y est bridé un faisceau (28) en nid d'abeille, dont la dimension des alvéoles est plus grande que celle des perforations de la tôle (24) perforée.

2. Installation suivant la revendication 1, **caractérisée en ce que** le faisceau (28) est supporté par une deuxième tôle (29) perforée ayant un taux de vide de 40% à 60%.

3. Installation suivant la revendication 1 ou 2, **caractérisée en ce que** la tôle (24) perforée a un taux de vide compris entre 10% et 60%.

4. Installation suivant l'une des revendications précédentes, **caractérisée en ce que** la tôle (24) perforée est recouverte d'une toile (30) métallique fine ayant un taux de vide compris entre 25% et 50%.

5. Installation suivant la revendication 4, **caractérisée en ce que** les perforations de la toile ont une dimension comprise entre 0,1 et 1 mm.

6. Installation suivant l'une des revendications précédentes, **caractérisée en ce que** le faisceau (28) est monté dans un tiroir (31) amovible.

7. Installation suivant l'une des revendications précédentes, **caractérisée en ce que** le rapport de la longueur du nid d'abeille au diamètre équivalent du nid d'abeille est plus grand que 10.

**Patentansprüche**

1. Anlage zum Trocknen einer Vliesstoffbahn, umfassend:

- einen Ventilator (6),
- einen Wärmeofen (3), der einen Eingang und einen Ausgang aufweist,
- eine Einlassleitung (C1), die den Abluftauslass des Ventilators (6) mit dem Eingang des Ofens (3) in Verbindung bringt und Verdrängungsluft an den Eingang des Ofens schickt,
- eine Wärmequelle (4), die derart angeordnet ist, dass die Verdrängungsluft in der Einlassleitung (C1) erwärmt wird,

- eine Auslassleitung (C2), die den Ausgang des Ofens (3) mit dem Ansaugeinlass des Ventilators (6) in Verbindung bringt,
- eine Trockenvorrichtung, umfassend einen Diffusionskasten (10), der einen Ausgangsanschluss aufweist,
- eine Umgehungsleitung (C3) in Umgehung der Einlassleitung (C1) vorgelagert vor der Wärmequelle (4), die die Einlassleitung (C1) mit dem Eingang der Trockenvorrichtung (10, 11) in Verbindung bringt,
- ein Transportmittel (2), das eine Bahn in der Trockenvorrichtung (10, 11) und in dem Ofen (3) bewegt, wobei die Trockenvorrichtung (10, 11) vorgelagert vor dem Ofen (3) in Bewegungsrichtung der Bahn angeordnet ist, und
- eine Abzugsleitung (C4) von Luft aus der Trockenvorrichtung (10, 11),

**dadurch gekennzeichnet, dass** in dem Ausgangsanschluss (21) ein perforiertes Blech (24) angebracht ist und nachgelagert nach dem perforierten Blech (24) in dem Ausgangsanschluss (21) oder in einem Kanal (27), der daran angeflanscht ist, ein Leitweg (28) in Wabenform angebracht ist, wovon die Größe der Zellen größer als jene der Perforationen des perforierten Blechs (24) ist.

2. Anlage nach Anspruch 1, **dadurch gekennzeichnet, dass** der Leitweg (28) durch ein zweites perforiertes Blech (29) getragen ist, das einen Leeranteil von 40 % bis 60 % aufweist.

3. Anlage nach Anspruch 1 oder 2, **dadurch gekennzeichnet, dass** das perforierte Blech (24) einen Leeranteil aufweist, der zwischen 10 % bis 60 % beträgt.

4. Anlage nach einem der vorhergehenden Ansprüche, **dadurch gekennzeichnet, dass** das perforierte Blech (24) von einem feinen Metallgewebe (30) bedeckt ist, das einen Leeranteil aufweist, der zwischen 25 % bis 50 % beträgt.

5. Anlage nach Anspruch 4, **dadurch gekennzeichnet, dass** die Perforationen des Blechs eine Größe aufweisen, die zwischen 0,1 und 1 mm beträgt.

6. Anlage nach einem der vorhergehenden Ansprüche, **dadurch gekennzeichnet, dass** der Leitweg (28) in einer herausnehmbaren Schublade (31) angebracht ist.

7. Anlage nach einem der vorhergehenden Ansprüche, **dadurch gekennzeichnet, dass** das Verhältnis der Länge der Wabe zum äquivalenten Durchmesser der Wabe größer als 10 ist.

**Claims**

1. An installation for drying a non-woven web which comprises:

   - a fan (6),
   - a heating oven (3) having an inlet and an outlet,
   - an inlet conduit (C1) which connects the delivery of the fan (6) with the inlet of the oven (3) and sends delivered air to the inlet of the oven,
   - a heat source (4) arranged in such a way that the air delivered in the inlet conduit (C1) is heated,
   - an outlet conduit (C2) which connects the outlet of the oven (3) with the intake of the fan (6),
   - a drying device comprising a diffusion chamber (10) having an outlet fitting (21),
   - a branch conduit (C3), in the branch of the inlet conduit (C1) upstream of the heat source (4), connecting the inlet conduit (C1) with the inlet of the drying device (10, 11),
   - a means of transport (2) which displaces a web in the drying device (10, 11) and in the oven (3), the drying device (10, 11) being upstream of the oven (3) in the direction of displacement of the web, and
   - a conduit (C4) for extracting the air from the drying device (10, 11),

   **characterised in that** there is mounted in said fitting (21) a perforated sheet (24) and downstream of the perforated sheet (24) is mounted in the outlet fitting (21) or in a channel (27) which is clamped to the fitting (21) a honeycombed bundle (28), the dimension of whose cells is greater than that of the perforations of the perforated sheet (24).

2. The installation according to claim 1, **characterised in that** the bundle (28) is supported by a second perforated sheet (29) having a void rate that is greater than 40% to 60%.

3. The installation according to claim 1 or 2, **characterised in that** the perforated sheet (24) has a void rate between 10% and 60%.

4. The installation according to any one of the preceding claims, **characterised in that** the perforated sheet (24) is covered with a thin metallic cloth (30) having a void rate between 25% and 50%.

5. The installation according to claim 4, **characterised in that** a dimension of the perforation of the cloth are from 0.1 mm to 1 mm.

6. The installation according to one of the preceding claims, **characterised in that** the bundle (28) is mounted in a movable drawer (31).

7. The installation according to any one of the preceding claims, **characterised in that** the ratio of the honeycomb length to the equivalent diameter of the honeycomb is greater than 10.

Figure 1

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6551461 B2